# EUROPEAN PATENT SPECIFICATION

(11) **EP 3 725 686 B1**
(45) Date of publication and mention of the grant of the patent: **14.06.2023**
(21) Application number: 19216197.4
(22) Date of filing: 13.12.2019
(51) Int. Cl.: B64D 15/12, B64C 3/18, B64C 3/26

(54) **BONDED STRUCTURAL RIB FOR HEATED AIRCRAFT LEADING EDGE**
GEBONDETE STRUKTURRIPPE FÜR EINE BEHEIZTE FLUGZEUGVORDERKANTE
NERVURE STRUCTURALE COLLÉE POUR BORD D'ATTAQUE D'AÉRONEF CHAUFFÉ

(30) Priority: 19.04.2019 US 201916389313
(43) Date of publication of application: 21.10.2020
(73) Proprietor: Goodrich Corporation, Charlotte, NC 28217-4578 (US)
(72) Inventor: DIDYK, Mark James, Mogadore, OH Ohio 44260 (US); MULLEN, James, Wadsworth, OH Ohio 44281 (US); HU, Jin, Hudson, OH Ohio 44236 (US); BOTURA, Galdemir Cezar, Akron, OH Ohio 44313 (US); SLANE, Casey, Tallmadge, OH Ohio 44278 (US)
(74) Representative: Dehns

(56) References cited:
- EP-A1- 2 049 394
- EP-A1- 2 213 139
- EP-B1- 2 049 394
- EP-B1- 2 213 139
- CN-Y- 201 195 594
- US-A1- 2015 053 663

## Description

### FIELD

The present disclosure relates to leading edges on aircrafts, and more particularly, to bonded structural ribs for heating a leading edge of an aircraft.

### BACKGROUND

Aircrafts are equipped with wings, which generate lift and enable aircrafts to fly. Ice accretion may occur on a leading edge of an aircraft due to cold temperatures at high altitudes. A leading edge may be heated by utilizing thermoelectric heaters along a leading edge of an aircraft. A structural rib may be added in spaced increments to a leading edge to provide support to the leading edge. There is a need in the art to have a continuous thermoelectric heater across a leading edge, where the structural ribs do not interrupt the thermoelectric heater. Structural ribs are disclosed in US 2015/053663, EP 2213139, CN 201 195 594 and EP 2049394.

### SUMMARY

An aircraft is disclosed herein as defined by claim 1.

Optional features are set out in the dependent claims.

A method for coupling a structural rib and a thermoelectric element to a leading edge of a wing is disclosed herein as defined by claim 7.

The curing of the second chemical adhesive may further comprise curing the first chemical adhesive.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a plain view showing an aircraft, in accordance with various embodiments;
FIG. 2 illustrates a perspective view of a structural rib for a leading edge of an aircraft, in accordance with various embodiments;
FIG. 3 illustrates a cross-sectional view of a leading edge of a wing in accordance with various embodiments;
FIG. 4 illustrates a perspective view of a structural rib for a leading edge of an aircraft, in accordance with various embodiments;
FIG. 5 illustrates a cross-sectional view of a leading edge of a wing in accordance with various embodiments;
FIG. 6 illustrates a perspective view of a structural rib for a leading edge of an aircraft, in accordance with various embodiments; and
FIG. 7 illustrates a flow chart of a bonding method, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to tacked, attached, fixed, coupled, connected or the like may include permanent, removable, temporary, partial, full and/or any other possible attachment option. Additionally, any reference to without contact (or similar phrases) may also include reduced contact or minimal contact.

Disclosed herein is a leading-edge heating system designed to provide uniform heat to the leading edge of an aircraft, while maintaining the structural integrity of the wing.

A leading-edge heating system, as disclosed herein, may have particular application for de-icing a leading edge of a wing upon ice accretion forming during flight. A leading-edge heating system, as disclosed herein, may have a continuous electrothermal heater extending continuously across the span of a leading edge, and the system may use a plurality of structural ribs spaced across the span of the leading-edge. The leading edge heating system may bond the continuous electrothermal heater to a leading edge skin disposed on an internal surface of a wing. The plurality of structural ribs may be bonded to the electrothermal heater via adhesive bonding.

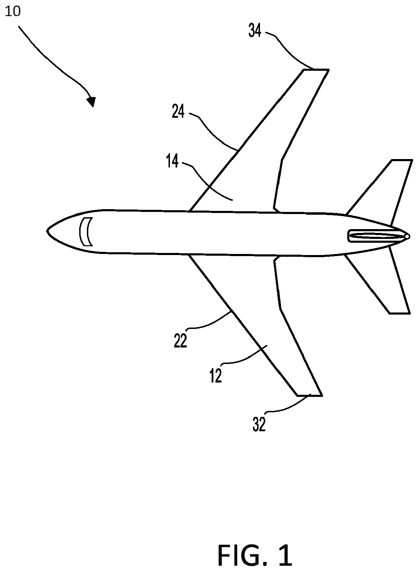

With reference to FIG. 1, an aircraft 10 is provided with a left side wing 12 and a right side wing 14 designed to provide lift to the aircraft and enable it to fly. Each wing (12, 14) has a leading edge (22, 24) extending from the fuselage 20 to a wing tip (32, 34). The leading edge (22, 24) may direct the flow of air around each wing (12, 14) during operation. The flow traveling under the wing may provide pressure in the vertical direction of the wing and generate lift for the aircraft. During operation, leading edges (22, 24) may experience ice accretion at high altitudes due to cold temperatures. Aircraft leading edges (22, 24) may be structurally supported by various ribs spaced across the span of the leading edge (22, 24). Leading edges (22, 24) are cooled by a thermoelectric element extending along the span of the leading edge (22, 24). In various embodiments, wiring may extend along the span and provide electrical connections to a thermoelectric element and/or electrical components needing power along the wing, such as wing tip lights. The wiring may be supported by the plurality of structural ribs providing support to the leading edges (22, 24).

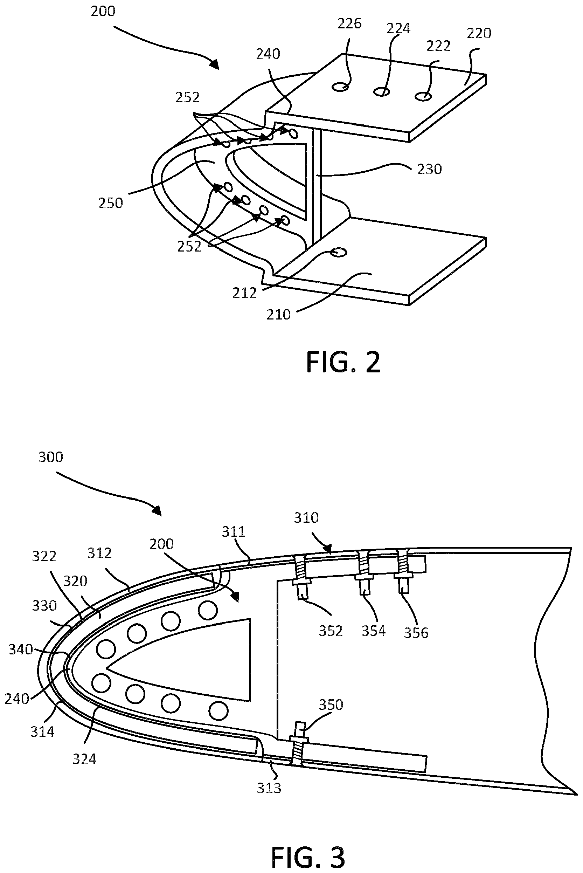

Referring now to FIG. 2, a structural rib 200 in accordance with various embodiments of the present disclosure is depicted. The structural rib 200 comprises a bottom flange 210, a top flange 220, a vertical support 230 connecting the bottom flange 210 to the top flange 220, a forward flange 240, and a radial flange 250. In various embodiments, the forward flange 240 may have a contoured surface configured to interface with a leading edge of an aircraft wing. The radial flange 250 extends radially inward from an inner surface of forward flange 240. The radial flange 250 comprises a plurality of apertures 252 spaced circumferentially around the forward flange 240 and extending axially through radial flange 250. The plurality of apertures 252 may decrease the weight of structural rib 200, while maintaining the support needed for an aircraft leading edge. The plurality of apertures 252 may also be configured to receive grommets. Grommets may provide support for electrical wires being routed through the structural ribs from the fuselage in a direction spanwise away from the fuselage.

In various embodiments, bottom flange 210 may comprise a bottom rivet aperture 212. The bottom rivet aperture 212 may extend through flange 210 from a bottom flange top surface to a bottom flange bottom surface. Similarly, top flange 220 may comprise top rivet apertures (222, 224, 226). Top rivet apertures (222, 224, 226) may extend through a top flange top surface to a top flange bottom surface. The bottom rivet aperture 212 and the top rivet apertures (222, 224, 226) may be configured to receive rivets to mechanically fasten the structural rib to an aircraft wing. The top flange 220 and the bottom flange 210 may be disposed aft of the forward flange 240. By being aft the forward flange 240, mechanically fastening bottom flange 210 and top flange 220 to an aircraft wing may not disrupt a thermoelectric heating element disposed along a leading edge of an aircraft. In various embodiments, forward flange 240 is a continuous surface extending from an edge of top flange 220 along a radius of curvature to an edge of the bottom flange 210 creating a rounded forward flange 240.

In various embodiments, the structural rib 200 may be manufactured from composite materials, aluminum, titanium, stainless steel, or any other material commonly known in the art. In various embodiments, the structural rib 200 is manufactured from carbon fiber, fiberglass, Amarid, thermoplastic fibers (e.g., polypropylene, polyester, polyethylene, metallic composite hybrids (e.g., fiberglass/aluminum)). In various embodiments, materials could be woven or non-woven including unidirectional plain satins, twill, spread tow, etc. In various embodiments, composite materials can be impregnated with resins, such as epoxy, cyanate ester, bismaleimides, polyester, phenolic, polyimide, and/or benzoxazines.

Referring now to FIG. 3, spanwise cross section of a portion of a wing 300, in accordance with various embodiments, is depicted. In various embodiments, wing 300 may comprise a wing skin 310. In various embodiments, the wing skin 310 may comprise an erosion skin. The wing skin may comprise a leading edge portion 312 extending from a suction side 311 of the wing skin 310 along a radius of curvature to the pressure side 313 of the wing skin 310 to create a rounded profile. The wing further comprises a thermoelectric element 320 disposed between the leading edge portion 312 and the forward flange 240 of the structural rib 200. In various embodiments, the thermoelectric element may comprise a carbon nanotube electrothermal heater. In various embodiments, the thermoelectric element 320 may extend continuously, and uninterrupted, along the span of the leading edge.

A first chemical adhesive 330 is disposed between the thermoelectric element 320 and the and the leading edge portion 312 of the wing skin 310. Similarly, a second chemical adhesive 340 is disposed between the forward flange 240 and the thermoelectric element 320. In various embodiments, composite material of the structural rib 200 can be impregnated with the first chemical adhesive 330, such as epoxy, cyanate ester, bismaleimides, polyester, phenolic, polyimide, and/or benzoxazines. In various embodiments, the first chemical adhesive 330 may comprise epoxy. In various embodiments, the second chemical adhesive 340 may be similar, or dissimilar, to the first chemical adhesive 330. In various embodiments, thermoelectric element 320 may be adhesively bonded to the leading edge portion 312 of the wing skin 310. Similarly, the structural rib 200 may be adhesively bonded to the thermoelectric element along an outer surface of forward flange 240. The chemical adhesives (330, 340) may electrically isolate the thermoelectric element 320 from the wing skin 310 and the structural rib 200. This may prevent the thermoelectric element 320 from short circuiting and enable the thermoelectric element 320 to provide uniform heating to the leading edge portion 312 of the wing skin 310. In various embodiments, the chemical adhesives (330, 340) may bond the components together without the addition of heat and/or thermal treatment.

In various embodiments, the structural rib 200 may be mechanically fastened to the wing skin 310 aft of the leading edge portion 312. By mechanically fastening the structural rib back into the suction side 311 and the pressure side 313 of the structural rib may be tied back into the larger ribs within the airfoil structure, creating a more robust structural rib for support of the leading edge. In various embodiments, the structural rib 200 may be mechanically fastened to the pressure side 313 of the wing via a pressure side rivet 350. In various embodiments, a plurality of suction side rivets (352, 354, 356) may fasten the structural rib to the suction side 311 of the wing. A single pressure side rivet 313 may limit the interruption of the lifting surface. In various embodiments, the rivets (350,352, 354, 356) may be electrically isolated from the thermoelectric heater via chemical adhesives (330, 340). Additionally, by mechanically fastening the structural rib 200, in addition to the adhesive bonding, the structural rib may continue to provide structural support to the leading edge portion 312 if the adhesive bond were to break.

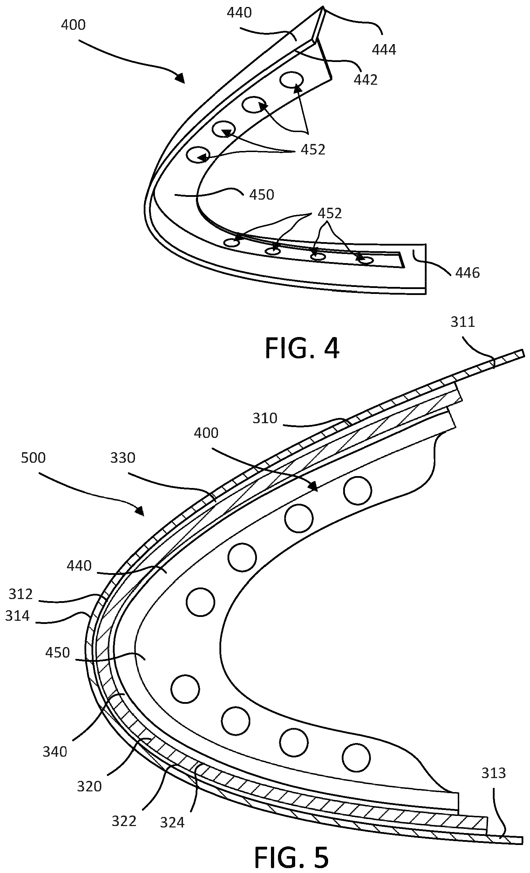

Referring now to FIG. 4, a structural rib 400 in accordance with various embodiments of the present disclosure is depicted. The structural rib 400 may comprise a forward flange 440 and a radial flange 450. In various embodiments, the forward flange 440 may have a contoured surface configured to interface with a leading edge of an aircraft wing. The forward flange may have a front surface 442 and a back surface 444. Disposed between the front surface 442 and the back surface 444 of the forward flange 440 may be a radial flange 450 extending from an inner surface 446 of forward flange 440 radially inward. In various embodiments, the thickness of radial flange 450 may be similar to the thickness of forward flange 440. In various embodiments, the thickness of the forward flange 440 may be between 0.0127 cm - 1.27 cm (0.005 inches - 0.5 inches). In various embodiments, the thickness of the radial flange 450 may be between 0.0127 cm-1.27 cm (0.005 inches - 0.5 inches). In various embodiments, the thickness of the forward flange 440 may be continuous. In various embodiments, the thickness of the forward flange 440 may vary across forward flange 440. Similarly, the thickness of radial flange 450 may be continuous, or it may vary across the radial flange 450. In various embodiments, the radial flange 450 may comprise a plurality of apertures 452 spaced circumferentially around the forward flange 450 and extending axially through radial flange 450. The plurality of apertures may decrease the weight of structural rib 400, while maintaining the support needed for an aircraft leading edge. The plurality of apertures 452 may also be configured to receive grommets. Grommets may provide support for electrical wires being routed through the structural ribs from the fuselage in a direction spanwise away from the fuselage.

In various embodiments, the structural rib 400 may be manufactured from composite materials, aluminum, titanium, stainless steel, or any other suitable material commonly known in the art. In various embodiments, the structural rib 200 is manufactured from carbon fiber, fiberglass, Amarid, thermoplastic fibers (e.g., polypropylene, polyester, polyethylene, metallic composite hybrids (e.g., fiberglass/aluminum). In various embodiments, materials could be woven or non-woven including unidirectional plain satins, twill, spread tow, etc. In various embodiments, composite materials can be impregnated with resins, such as epoxy, cyanate ester, bismaleimides, polyester, phenolic, polyimide, and/or benzoxazines.

Referring now to FIG. 5, spanwise cross section of a portion of a wing 500, in accordance with various embodiments, is depicted. In various embodiments, wing 500 may comprise a wing skin 310. In various embodiments, the wing skin 310 may comprise an erosion skin. The wing skin may comprise a leading edge portion 312 extending from a suction side 311 of the wing skin 310 along a radius of curvature to the pressure side 313 of the wing skin 310 to create a rounded profile. In various embodiments, the wing may further comprise a thermoelectric element 320 disposed between the leading edge portion 312 and the forward flange 440 of the structural rib 400. In various embodiments, the thermoelectric element may comprise a carbon nanotube electrothermal heater. In various embodiments, the thermoelectric element 320 may extend continuously, and uninterrupted, along the span of the leading edge.

In various embodiments, a first chemical adhesive 330 may be disposed between the thermoelectric element 320 and the leading edge portion 312 of the wing skin 310. Similarly, a second chemical adhesive 340 may be disposed between the forward flange 440 and the thermoelectric element 320. In various embodiments, thermoelectric element 320 may be adhesively bonded to the leading edge portion 312 of the wing skin 310. Similarly, the structural rib 400 may be adhesively bonded to the thermoelectric element along an outer surface of forward flange 440. The chemical adhesives (330, 340) may electrically isolate the thermoelectric element 320 from the wing skin 310 and the structural rib 400. This may prevent the thermoelectric element 320 from short circuiting and enable the thermoelectric element 320 to provide uniform heating to the leading edge portion 312 of the wing skin 310.

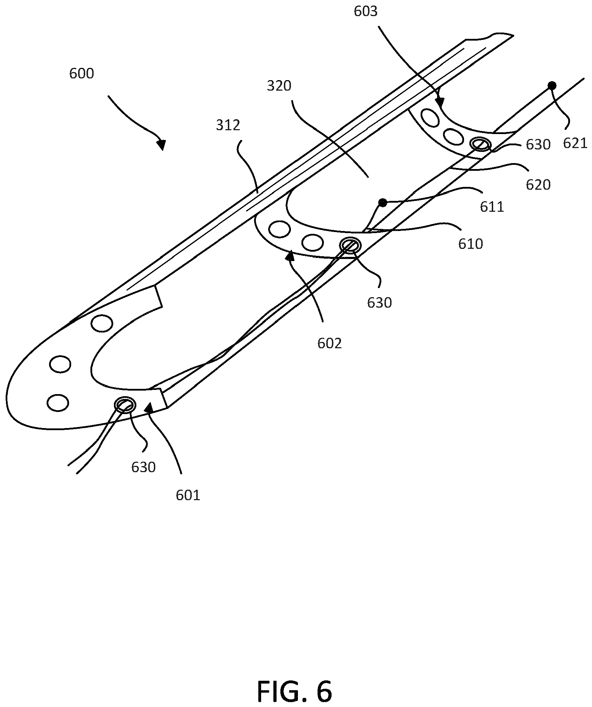

Referring now to FIG. 6, a perspective view of a portion of a wing 600 in accordance with various embodiments is depicted. In various embodiments, wing 600 may incorporate structural ribs, thermoelectric elements, and chemical adhesives as depicted in FIGS. 3 and 5. Wing 600 may comprise a plurality of structural ribs (601, 602, 603). Each structural rib (601, 602, 603) may be either structural rib 200 or structural rib 400 as depicted in FIGS. 2 and 4.

With reference to FIGS. 2, 4, and 6, grommets 630 may be disposed in apertures (242, 452). The grommets 630 may be configured to support wiring (610, 620). In various embodiments, wiring 610 may need to be disposed at a first connection point 611 between a second structural rib 602 and a third structural rib 603, and wiring 620 may need to be disposed at a second connection point 621 disposed between distal to the third structural rib. The apertures (242, 452) and grommets 630 may allow wiring to extend through structural ribs 601, 602, and/or 603, maintain electrical isolation from the structural ribs, and connect to thermoelectric element 320. The apertures (242, 452) and grommets (630), may additionally allow various connection points for wiring between differing ribs. In various embodiments, electrical circuits can extend through ribs 601, 602, and/or 603, and along the leading edge portion 312 of the wing.

In various embodiments, the first structural rib 601 may be proximate the fuselage. In various embodiments, the distance between the first structural rib 601 and the second structural rib 602 may be greater than the distance between the second structural rib 602 and the third structural rib 603. In various embodiments, the thermoelectric element 320 may provide more uniform heat distribution and use less power than if the electrical circuits were stopped between structural ribs because the heating areas between ribs may differ. In various embodiments, the first connection point 611 and the second connection point 621 may be more precisely located and/or enable a continuous thermoelectric element 320 across the span of a leading edge of an airfoil.

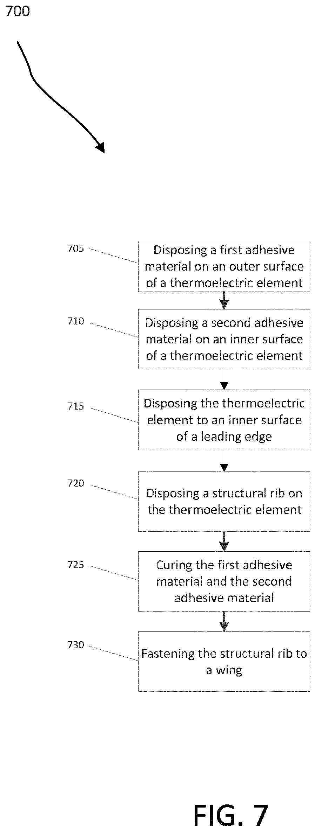

FIG. 7 illustrates a block diagram depicting a method of bonding a structural rib and thermoelectric element to a leading edge of a wing, in accordance with various embodiments. With combined reference to FIGS. 3 and 5, treating a thermoelectric element 320 may have an outer surface 322 and an inner surface 324. In various embodiments, a first chemical adhesive 330 may disposed on the outer surface (step 705) by any suitable method. The first chemical adhesive 330 may comprise one of the following: epoxy, cyanate ester, bismaleimides, polyester, phenolic, polyimide, benzoxazines. In various embodiments, the first chemical adhesive 330 may comprise epoxy. In various embodiments, a second chemical adhesive 334 may disposed on the inner surface (step 710) by any suitable method. In various embodiments, the first chemical adhesive 330 may be comprised of the same material as the second chemical adhesive 340. In various embodiments, the first chemical adhesive 330 may be comprised of a different material as the second chemical adhesive 340.

In various embodiments, the outer surface 322 of the thermoelectric element 320 may be coupled to a leading edge inner surface 314 disposed radially inward of the leading edge outer surface via the first chemical adhesive 330 (step 715). In various embodiments, an outer surface of forward flange (240, 440) of structural rib (200, 400) may be disposed on the inner surface 324 of the thermoelectric element 320 (step 720).

In various embodiments, the first chemical adhesive 330 and the second chemical adhesive 340 may be cured at the same time by any method commonly known in the art. (step 725) In various embodiments, the first adhesive material may be cured prior to disposing the second chemical adhesive 340 on the thermoelectric element, and the second chemical adhesive 340 may be cured after the structural rib (200, 400) is disposed on the thermoelectric element 320. The first chemical adhesive 330 and the second chemical adhesive 340 may be cured at the same temperature for the same duration. In various embodiments, the first chemical adhesive 330 and the second chemical adhesive may be cured at different temperatures for different durations. In various embodiments, composite material of the structural rib 400 can be impregnated with the first chemical adhesive 330, such as epoxy, cyanate ester, bismaleimides, polyester, phenolic, polyimide, and/or benzoxazines.

In various embodiments the method 700 may further comprise fastening the structural rib 200 to the wing skin 310 (step 730). The fastening may be done aft of the leading edge portion 312. In various embodiments, the rivets (350, 352, 354, 356) may be electrically isolated from the thermoelectric element 320 by the first chemical adhesive 330 and/or the second chemical adhesive 340. The fastening may be done by method known in the art, such via rivets, bolts, screws, or the like.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An aircraft, comprising:
a fuselage (20);
a wing (12,14) having a leading edge (22,24), a suction side portion (311), a pressure side portion (313), and a wing tip (32.34);
a thermoelectric element (320) having a thermoelectric inner surface and extending from a first end of the leading edge in a spanwise direction to a second end of the leading edge, the first end being proximate the fuselage and the second end being proximate the wing tip;
a first chemical adhesive (330) disposed between a leading edge inner surface of the leading edge and the thermoelectric element;
a second chemical adhesive (340) disposed on the thermoelectric inner surface; and
a first structural rib (200,400) disposed on the second chemical adhesive;
wherein the first structural rib comprises a forward flange (440) having a rounded shape and a radial flange (450) extending radially inward from a forward flange inner surface of the forward flange; and **characterized in that**
the radial flange has a plurality of apertures (452) disposed circumferentially around the radial flange and extending in the spanwise direction through the radial flange.

2. The aircraft of claim 1, wherein the first structural rib further comprises a bottom flange (210) extending in a chordwise direction from a bottom surface of the forward flange and a top flange (220) extending in the chordwise direction from a top surface of the top flange.

3. The aircraft of claim 2, wherein the first structural rib further comprises a vertical support extending from the top flange to the bottom flange, or wherein the first structural rib further comprises a first rivet aperture disposed on the bottom flange and a second rivet aperture disposed on the top flange, and optionally further comprising a first rivet coupling the bottom flange to the suction side portion via the first rivet aperture, and a second rivet coupling the top flange to the pressure side portion via the second rivet aperture.

4. The aircraft of any of claims 1 to 3, further comprising a grommet disposed within an aperture from the plurality of apertures.

5. The aircraft of claim 4, further comprising a first wire and a second wire, the first wire and the second wire being supported by the grommet.

6. The aircraft of claim 5, further comprising a second structural rib (602) disposed on the thermoelectric element between the wing tip and the first structural rib, the first wire extending to a first connection point between the first structural rib and the second structural rib, and the second wire extending to a second connection point between the second structural rib and the wing tip.

7. A method for coupling a structural rib and a thermoelectric element to a leading edge of a wing, the method comprising:
disposing a second chemical adhesive on a portion of an inner surface of the thermoelectric element;
disposing the thermoelectric element on a leading edge inner surface of the leading edge;
disposing the structural rib on the thermoelectric element, the structural rib having a forward flange, the forward flange having a contoured surface being complementary to the leading edge, the contoured surface being in contact with the second chemical adhesive; and
curing the second chemical adhesive; and
further comprising fastening the structural rib to a suction side of the wing via a first fastener through a first flange of the structural rib and fastening the structural rib to a pressure side of the wing via a second fastener through a second flange of the structured rib, and
wherein the structural rib is electrically isolated from the thermoelectric element, and
further comprising disposing a first chemical adhesive on an outer surface of the thermoelectric element as a first step, wherein disposing the thermoelectric element further comprises having the inner surface of the leading edge in contact with the first chemical adhesive.

8. The method of claim 7, wherein curing the second chemical adhesive further comprises curing the first chemical adhesive.

## Patentansprüche

1. Flugzeug, umfassend:
einen Rumpf (20);
einen Flügel (12, 14), der eine Vorderkante (22, 24), einen Saugseitenabschnitt (311), einen Druckseitenabschnitt (313) und eine Flügelspitze (32, 34) aufweist;
ein thermoelektrisches Element (320), das eine thermoelektrische Innenfläche aufweist und sich von einem ersten Ende der Vorderkante in einer Spannweitenrichtung zu einem zweiten Ende der Vorderkante erstreckt, wobei das erste Ende nahe dem Rumpf ist und das zweite Ende nahe der Flügelspitze ist;
einen ersten chemischen Klebstoff (330), der zwischen einer Vorderkanteninnenfläche der Vorderkante und dem thermoelektrischen Element angeordnet ist;
einen zweiten chemischen Klebstoff (340), der an der thermoelektrischen Innenfläche angeordnet ist; und
eine erste Strukturrippe (200, 400), die an dem zweiten chemischen Klebstoff angeordnet ist;
wobei die erste Strukturrippe einen vorderen Flansch (440), der eine abgerundete Form aufweist, und einen radialen Flansch (450), der sich von einer vorderen Flanschinnenfläche des vorderen Flansches radial nach innen erstreckt, umfasst; und
**dadurch gekennzeichnet, dass**
der radiale Flansch eine Vielzahl von Öffnungen (452) aufweist, die in Umfangsrichtung um den radialen Flansch herum angeordnet ist und sich in der Spannweitenrichtung durch den radialen Flansch erstreckt.

2. Flugzeug nach Anspruch 1, wobei die erste Strukturrippe ferner einen unteren Flansch (210), der sich in einer Sehnenrichtung von einer unteren Oberfläche des vorderen Flansches erstreckt, und einen oberen Flansch (220), der sich in der Sehnenrichtung von einer oberen Oberfläche des oberen Flansches erstreckt, umfasst.

3. Flugzeug nach Anspruch 2, wobei die erste Strukturrippe ferner eine vertikale Stütze umfasst, die sich von dem oberen Flansch zu dem unteren Flansch erstreckt, oder wobei die erste Strukturrippe ferner eine erste Nietöffnung, die an dem unteren Flansch angeordnet ist, und eine zweite Nietöffnung, die an dem oberen Flansch angeordnet ist, umfasst, und optional ferner umfassend einen ersten Niet, der den unteren Flansch über die erste Nietöffnung mit dem Saugseitenabschnitt koppelt, und einen zweiten Niet, der den oberen Flansch über die zweite Nietöffnung mit dem Druckseitenabschnitt koppelt.

4. Flugzeug nach einem der Ansprüche 1 bis 3, ferner umfassend eine Tülle, die innerhalb einer Öffnung aus der Vielzahl von Öffnungen angeordnet ist.

5. Flugzeug nach Anspruch 4, ferner umfassend einen ersten Draht und einen zweiten Draht, wobei der erste Draht und der zweite Draht von der Tülle getragen werden.

6. Flugzeug nach Anspruch 5, ferner umfassend eine zweite Strukturrippe (602), die an dem thermoelektrischen Element zwischen der Flügelspitze und der ersten Strukturrippe angeordnet ist, wobei sich der erste Draht zu einem ersten Verbindungspunkt zwischen der ersten Strukturrippe und der zweiten Strukturrippe erstreckt, und sich der zweite Draht zu einem zweiten Verbindungspunkt zwischen der zweiten Strukturrippe und der Flügelspitze erstreckt.

7. Verfahren zum Koppeln einer Strukturrippe und eines thermoelektrischen Elements mit einer Vorderkante eines Flügels, wobei das Verfahren Folgendes umfasst:
Anordnen eines zweiten chemischen Klebstoffs an einem Abschnitt einer Innenfläche des thermoelektrischen Elements;
Anordnen des thermoelektrischen Elements an einer Vorderkanteninnenfläche der Vorderkante;
Anordnen der Strukturrippe an dem thermoelektrischen Element, wobei die Strukturrippe einen vorderen Flansch aufweist, wobei der vordere Flansch eine konturierte Oberfläche aufweist, die komplementär zu der Vorderkante ist, wobei die konturierte Oberfläche in Kontakt mit dem zweiten chemischen Klebstoff ist; und
Aushärten des zweiten chemischen Klebstoffs; und
ferner umfassend Befestigen der Strukturrippe an einer Saugseite des Flügels über ein erstes Befestigungselement durch einen ersten Flansch der Strukturrippe und Befestigen der Strukturrippe an einer Druckseite des Flügels über ein zweites Befestigungselement durch einen zweiten Flansch der Strukturrippe, und
wobei die Strukturrippe von dem thermoelektrischen Element elektrisch isoliert ist, und
ferner umfassend Anordnen eines ersten chemischen Klebstoffs an einer Außenfläche des thermoelektrischen Elements als einen ersten Schritt, wobei das Anordnen des thermoelektrischen Elements ferner umfasst, dass die Innenfläche der Vorderkante in Kontakt mit dem ersten chemischen Klebstoff ist.

8. Verfahren nach Anspruch 7, wobei das Aushärten des zweiten chemischen Klebstoffs ferner Aushärten des ersten chemischen Klebstoffs umfasst.

## Revendications

1. Aéronef, comprenant :
un fuselage (20) ;
une aile (12, 14) ayant un bord d'attaque (22, 24), une partie côté aspiration (311), une partie côté pression (313) et un saumon d'aile (32.34) ;
un élément thermoélectrique (320) ayant une surface interne thermoélectrique et s'étendant d'une première extrémité du bord d'attaque dans le sens de l'envergure vers une seconde extrémité du bord d'attaque, la première extrémité étant à proximité du fuselage et la seconde extrémité étant à proximité du saumon d'aile ;
un premier adhésif chimique (330) disposé entre une surface interne de bord d'attaque du bord d'attaque et l'élément thermoélectrique ;
un second adhésif chimique (340) disposé sur la surface interne thermoélectrique ; et
une première nervure structurale (200, 400) disposée sur le second adhésif chimique ;
dans lequel la première nervure structurale comprend une bride avant (440) ayant une forme arrondie et une bride radiale (450) s'étendant radialement vers l'intérieur à partir d'une surface interne de bride avant de la bride avant ; et
**caractérisé en ce que**
la bride radiale a une pluralité d'ouvertures (452) disposées circonférentiellement autour de la bride radiale et s'étendant dans le sens de l'envergure à travers la bride radiale.

2. Aéronef selon la revendication 1, dans lequel la première nervure structurale comprend en outre une bride inférieure (210) s'étendant dans le sens de la corde à partir d'une surface inférieure de la bride avant et d'une bride supérieure (220) s'étendant dans le sens de la corde à partir d'une surface supérieure de la bride supérieure.

3. Aéronef selon la revendication 2, dans lequel la première nervure structurale comprend en outre un support vertical s'étendant à partir de la bride supérieure vers la bride inférieure, ou dans lequel la première nervure structurale comprend en outre une première ouverture de rivet disposée sur la bride inférieure et une seconde ouverture de rivet disposée sur la bride supérieure, et comprenant éventuellement en outre un premier rivet couplant la bride inférieure à la partie côté aspiration via la première ouverture de rivet, et un second rivet couplant la bride supérieure à la partie côté pression via la seconde ouverture de rivet.

4. Aéronef selon l'une quelconque des revendications 1 à 3, comprenant en outre un passe-fil disposé à l'intérieur d'une ouverture à partir de la pluralité d'ouvertures.

5. Aéronef selon la revendication 4, comprenant en outre un premier fil et un second fil, le premier fil et le second fil étant supportés par le passe-fil.

6. Aéronef selon la revendication 5, comprenant en outre une seconde nervure structurale (602) disposée sur l'élément thermoélectrique entre le saumon d'aile et la première nervure structurale, le premier fil s'étendant jusqu'à un premier point de connexion entre la première nervure structurale et la seconde nervure structurale, et le second fil s'étendant jusqu'à un second point de connexion entre la seconde nervure structurale et le saumon d'aile.

7. Procédé de couplage d'une nervure structurale et d'un élément thermoélectrique à un bord d'attaque d'une aile, le procédé comprenant :
la disposition d'un second adhésif chimique sur une partie d'une surface interne de l'élément thermoélectrique ;
la disposition de l'élément thermoélectrique sur une surface interne de bord d'attaque du bord d'attaque ;
la disposition de la nervure structurale sur l'élément thermoélectrique, la nervure structurale ayant une bride avant, la bride avant ayant une surface profilée complémentaire du bord d'attaque, la surface profilée étant en contact avec le second adhésif chimique ; et
le durcissement du second adhésif chimique ; et
comprenant en outre la fixation de la nervure structurale à un côté aspiration de l'aile via une première fixation à travers une première bride de la nervure structurale et la fixation de la nervure structurale à un côté pression de l'aile via une seconde fixation à travers une seconde bride de la nervure structurée, et
dans lequel la nervure structurale est électriquement isolée de l'élément thermoélectrique, et
comprenant en outre la disposition d'un premier adhésif chimique sur une surface externe de l'élément thermoélectrique en tant que première étape, dans lequel la disposition de l'élément thermoélectrique comprend en outre la mise en contact de la surface interne du bord d'attaque avec le premier adhésif chimique.

8. Procédé selon la revendication 7, dans lequel le durcissement du second adhésif chimique comprend en outre le durcissement du premier adhésif chimique.
